# FASCICULE DE BREVET EUROPEEN

(11) **EP 2 185 851 B1**
(45) Date de publication et mention de la délivrance du brevet: **11.11.2015**
(21) Numéro de dépôt: 08851529.1
(22) Date de dépôt: 08.09.2008
(51) Int. Cl.: F16L 33/207, F16L 33/213, F16L 33/01

(54) **PROCÉDÉ DE RÉALISATION D'UN RACCORD DE CONDUITE**
VERFAHREN ZUR HERSTELLUNG VON RÖHRENKONNEKTOREN
PIPE CONNECTOR PRODUCTION METHOD

(30) Priorité: 10.09.2007 FR 0706320
(43) Date de publication de la demande: 19.05.2010
(73) Titulaire: Technip France, 92400 Courbevoie (FR)
(72) Inventeur: CORNUT GENTILLE Alain, F-76490 Saint Wandrille-Rançon (FR)
(74) Mandataire: Gendron, Vincent Christian
(86) Numéro de dépôt international: PCT/FR2008/001250
(87) Numéro de publication internationale: WO 2009/066026

(56) Documents cités:
- WO-A-00/39495
- DE-C- 107 882
- FR-A- 1 065 294
- FR-A- 2 381 227
- GB-A- 709 398
- GB-A- 2 156 031
- US-A- 3 258 271

## Description

La présente invention se rapporte à un procédé de montage d'un embout sur une extrémité de conduite tubulaire flexible et également, à un raccord comprenant ladite extrémité de conduite tubulaire et l'embout monté selon le procédé.

Les conduites tubulaires flexibles concernées sont plus connues sous le nom de conduite « RTP », (pour Reinforced Thermoplastic Pipes, en anglais) et elles sont utilisées pour les applications terrestres (« on shore » en anglais) de transport des hydrocarbures ou d'eau sous pression. Elles ont pour avantage d'être plus rapides à installer et plus résistantes à la corrosion que les conduites rigides en acier. Leur diamètre interne est relativement faible, il est par exemple compris entre 50 et 200mm, et le fluide transporté est à une pression généralement comprise entre 50 et 200 bars et à une température qui peut atteindre 80 °C.

La structure de ces conduites est relativement simple et peu onéreuse. Elles comprennent de l'intérieur vers l'extérieur un tube polymérique interne en polymère, une armature réalisée généralement en matériaux composites et une gaine polymérique externe. Le tube polymérique interne a une fonction d'étanchéité vis-à-vis du fluide transporté par la conduite. Il est généralement réalisé en polyéthylène à haute densité. La gaine polymérique externe, qui est notamment réalisée en polyéthylène, a pour fonction la protection de l'armature.

L'armature a pour fonction la reprise des efforts mécaniques, en particulier ceux liés à la pression du fluide transporté. L'armature est généralement constituée d'au moins une paire de nappes croisées de fils enroulés en hélice. Les deux nappes superposées constituant chaque paire de nappes sont enroulées en sens contraire avec des angles d'hélice sensiblement égaux en valeur absolue, de façon à équilibrer la structure en torsion. Cet angle d'hélice est avantageusement de l'ordre de l'ordre de 55°, de manière à reprendre à la fois les efforts axiaux de traction et les efforts radiaux liés à la pression du fluide. Dans la plupart des cas, l'armature ne comporte que deux couches superposées, à savoir une paire de nappes croisées de fils d'armature enroulés à 55°. Lorsque le diamètre de la conduite et la pression de service sont élevés, il peut être nécessaire et avantageux d'ajouter une deuxième paire de nappes croisées de fils d'armature, si bien que l'armature comporte alors quatre couches superposées. Les fils des nappes d'armature sont par exemple constitués de fibres d'aramide, de carbone, de verre ou de polyester.

Le document FR2828722 décrit un exemple de conduite « RTP » dans laquelle les fils d'armature sont des rubans textiles renforcés avec des fibres de kevlar®, Le document WO2004/068016 présente un autre exemple dans lequel les fils d'armature sont constitués de fibres de verre.

Les conduites concernées par la présente invention sont dites de type non lié (« unbonded » en anglais) car leurs différentes couches constitutives sont substantiellement libres de glisser les unes par rapport aux autres lorsque la conduite est entraînée en flexion.

Un des inconvénients de ces conduites est le coût de leur raccordement. En effet, pour être raccordées ces conduites sont équipées à leur extrémité d'un embout, et les coûts de cet embout additionnés aux coûts de montage sont relativement importants en comparaison du coût des conduites nues.

Il est par exemple décrit dans le document FR 2 754 585, un procédé de montage d'un embout à l'extrémité d'une conduite tubulaire flexible de manière à réaliser un raccord. L'embout comprend une extrémité de raccordement et à l'opposé, une extrémité de montage destinée à être emmanchée dans l'extrémité de ladite conduite. Ledit raccord comprend également un manchon qui vient coiffer l'extrémité de conduite pour sertir l'extrémité de conduite tubulaire sur ladite extrémité de montage. Pour ce faire, on déforme et on augmente à force le diamètre interne de l'extrémité de montage en mettant en oeuvre une technique dénommée dudgeonnage ou olivage, ladite technique consistant introduire et à déplacer de force un dudgeon (« tube expander » en anglais) à l'intérieur et le long de ladite extrémité de montage, ledit dudgeon ayant un diamètre extérieur supérieur an diamètre intérieur initial de ladite extrémité de montage. Cette opération a pour effet de comprimer les parois de l'extrémité de la conduite à l'intérieur du manchon. Ensuite, afin de parfaire ce montage, on déforme et on réduit à force le diamètre externe du manchon en mettant en oeuvre une technique de tréfilage (« drawing » en anglais). Il en résulte un serrage ou sertissage de l'extrémité de la conduite entre d'une part l'extrémité de montage de l'embout et d'autre le manchon, ledit sertissage assurant les fonctions de jonction mécanique et d'étanchéité. Cette solution présente l'inconvénient de nécessiter un outillage spécialisé relativement important et coûteux pour réaliser les opérations de dudgeonnage et de tréflage. De plus, il est nécessaire de prévoir une longueur d'extrémité de conduite maintenue serrée entre le manchon et l'embout, relativement importante afin que, dans des conditions extrêmes l'embout ne se désolidarise pas de l'extrémité de la conduite. Par conséquent, le coût des matières utilisées pour réaliser l'embout en est d'autant augmenté. Le document FR-A-1 065 294 divulgue un procédé de montage d'un embout sur une extrémité de conduite permettant de maintenir les fils d'armature sur l'embout sans endommagement.

Aussi, un problème qui se pose et que vise à résoudre la présente invention est d'imaginer un procédé de montage d'un embout sur une conduite afin de réaliser un raccord qui soit non seulement d'un coût avantageux mais aussi qui puisse résister dans des conditions extrêmes d'utilisation.

Dans le but de résoudre ce problème, et selon un premier aspect, l'invention propose un procédé de montage d'un embout sur une extrémité de conduite tubulaire flexible, le procédé consistant, à fournir une conduite tubulaire flexible comprenant un tube polymérique interne, une armature autour dudit tube polymérique interne et une gaine polymérique externe autour de ladite armature, ladite armature comportant des fils d'armature enroulés autour dudit tube polymérique interne ; à fournir ensuite un embout comprenant une extrémité de montage destinée à être emmanchée dans l'extrémité de ladite conduite ; puis à fournir un manchon adapté à venir coiffer ladite extrémité de conduite pour sertir ladite extrémité de conduite sur ladite extrémité de montage ; selon l'invention. on forme une chambre annulaire étanche déformable à l'intérieur dudit manchon, ladite chambre étant destinée à entourer ladite extrémité de conduite ; puis on décollette ladite armature à ladite extrémité de conduite pour libérer des extrémités libres de fils d'armature et pour rabattre lesdites extrémités libres de fils d'armature contre ladite gaine polymérique externe avant de coiffer ladite extrémité de conduite avec ledit manchon ; et enfin, on injecte un fluide sous pression dans ladite chambre annulaire pour dilater ladite chambre annulaire et maintenir en prise lesdites extrémités libres de fils d'armature entre ladite gaine polymérique externe et ledit manchon.

Ainsi, une caractéristique de l'invention réside à la fois dans le mode de préparation de l'extrémité de conduite tubulaire et dans le mode de sertissage de l'extrémité de conduite sur ladite extrémité de montage par l'intermédiaire de la chambre annulaire étanche déformable. En effet, on dégage au moins partiellement des extrémités libres de fils d'armature par décolletage, de manière à pouvoir rabattre ensuite ces extrémités libres de fils d'armature à 180° contre la gaine polymérique externe et ensuite on engage l'extrémité de conduite à l'intérieur du manchon et à l'intérieur de la chambre annulaire étanche déformable. Puis enfin, on dilate la chambre annulaire qui s'étend alors dans un espace annulaire compris entre la gaine polymérique externe et le manchon et partant, elle vient comprimer non seulement la gaine polymérique externe mais aussi les extrémités libres de fils d'armature.

De la sorte, ces extrémités libres de fils d'armature vont être coincées entre la gaine polymérique externe et le manchon qui vient coiffer l'extrémité de conduite. Par conséquent, seront pris en sandwich entre la paroi externe de l'extrémité de montage de l'embout et la paroi interne du manchon, respectivement, le tube polymérique interne, l'armature, la gaine polymérique externe et les extrémités libres de fils d'armature rabattues. On notera que l'extrémité de montage de l'embout et le manchon étant rigides, la chambre annulaire étanche expansée tend à écraser sensiblement la paroi de la conduite. Ainsi, la gaine polymérique externe et l'armature notamment, qui selon l'art antérieur n'étaient pas liées ensemble et dont le glissement relatif lors des mouvements de la conduite était une cause de désolidarisation de l'embout, sont, grâce au procédé objet de l'invention, maintenues en position fixe l'une par rapport à l'autre au niveau de l'extrémité de la conduite grâce aux extrémités libres de fils d'armature rabattues à 180° contre la gaine polymérique externe. En effet, les extrémités libres de fils d'armature débouchent de l'intérieur de la gaine polymérique externe, puis elles sont recourbées contre le bord libre de cette gaine et ensuite appliquées contre la surface extérieure de cette gaine. Repliée de la sorte, l'extrémité libre de ces fils d'armature est totalement solidaire de la gaine polymérique externe lorsque l'extrémité de conduite est sertie entre le manchon et l'extrémité de montage de l'embout grâce à l'expansion de la chambre annulaire étanche.

Ainsi, grâce au procédé de montage conforme à l'invention, on s'affranchit des outillages spécialisés encombrants et coûteux, puisqu'il suffit d'injecter un fluide sous pression à l'intérieur de la chambre annulaire étanche déformable du manchon, ce qui peut se faire à l'aide d'une simple pompe à main. De plus, la longueur de l'extrémité de montage de l'embout et symétriquement celle du manchon, peuvent être significativement réduites, puisqu'une moins grande longueur d'extrémité de conduite peut être sertie, en comparaison de l'art antérieur, tout en conservant la résistance à l'arrachement de l'embout et l'étanchéité requises.

L'armature comporte avantageusement au moins une paire de nappes croisées superposées de fils d'armature enroulés avec un angle d'hélice dont la valeur absolue est comprise entre 52° et 58°, avantageusement entre 54° et 56° et préférentiellement égale à 55°. Cet angle optimum sensiblement égal à 55° confère à la paire de nappes croisées de fil d'armatures l'aptitude à reprendre à la fois les efforts de traction axiaux et les efforts radiaux liés à la pression du fluide.

Les fils d'armature peuvent être métalliques mais on préférera des matériaux composites ou tissés à base de fibres à haute ténacité du type aramide, verre, polyester ou de carbone. De tel fils en matériaux composites présentent, à résistance en traction égale, un poids et une rigidité en flexion nettement inférieurs à ceux de fils métalliques équivalents. Ces avantages permettent de réduire le poids de la conduite et de faciliter sa fabrication et son installation.

Selon un mode de mise en oeuvre de l'invention particulièrement avantageux, on injecte sous pression dans ladite chambre annulaire, un matériau initialement visqueux et adapté à prendre en masse après l'injection. De la sorte, si l'étanchéité de la chambre annulaire déformable vis-à-vis du fluide injecté est absolument nécessaire à l'instant précis de l'injection, après solidification, l'étanchéité est relativement secondaire puisque le matériau forme alors une pièce rigide indéformable. Ainsi, les transformations qui pourraient intervenir sur le manchon après le montage de l'embout, est notamment les contraintes qui pourraient détériorer la chambre annulaire déformable, seraient sans incidence sur le sertissage de l'extrémité de conduite. Avantageusement, on injecte dans la chambre annulaire déformable un matériau polymère réticulable, qui est initialement relativement visqueux mais qui peut néanmoins être injecté sous pression dans la chambre annulaire étanche déformable, et surtout, qui après injection réticule et durcit pour devenir un élément annulaire solide. On pourra notamment choisir un matériau polymère de type bicomposant qui permet d'obtenir un durcissement rapide du matériau et lequel présente une dureté importante. La rapidité de durcissement est un paramètre important puisqu'elle conditionne le temps pendant lequel la pression du matériau fluide dans la chambre annulaire devra être maintenue. On choisira par exemple comme matériau polymère, une résine époxy.

Selon un mode de réalisation particulier de l'invention, on monte à l'intérieur dudit manchon un ruban annulaire en matériau déformable pour former une chambre annulaire étanche déformable. Le ruban annulaire présentant deux bords circulaires opposés et le manchon une surface cylindrique interne, les deux bords circulaires opposés sont rendus solidaires de la surface cylindrique interne de manière étanche. Ainsi, la chambre annulaire étanche déformable est formée par la portion de surface interne du manchon recouverte par le ruban annulaire et par le ruban annulaire lui-même. Ce dernier étant déformable, en injectant un fluide sous pression entre la surface interne du manchon et le ruban annulaire, il tend à se déformer radialement ainsi qu'on l'expliquera dans la description détaillée qui va suivre.

Avantageusement, on fournit un embout comprenant en outre une autre extrémité de montage opposée à ladite une extrémité de montage et on fournit aussi en outre une autre conduite présentant une autre extrémité de conduite, ladite autre extrémité de montage étant emmanchée dans ladite autre extrémité de conduite, tandis que ledit manchon vient coiffer lesdites extrémités de conduite. Ainsi, un tel embout permet de raccorder ensemble deux extrémités de conduite de façon totalement symétrique et relativement rapidement. En effet, la préparation des deux extrémités de conduite est totalement analogue et identique à la préparation d'une seule extrémité de conduite telle que décrite ci-dessus. On fournit simplement un embout qui présente deux extrémités de montage opposées et sensiblement symétriques l'une de l'autre et on emmanche respectivement les extrémités de montage dans les extrémités de conduite. Puis, on vient coiffer les deux extrémités de conduite emmanchées d'un seul et même manchon équipé d'une seule et même chambre annulaire étanche déformable. Et enfin, de façon totalement analogue au mode de mise en oeuvre précédent, on injecte sous pression dans la chambre annulaire étanche déformable un fluide qui provoque la déformation et l'expansion de la chambre annulaire étanche déformable et vient sertir les deux extrémités de conduite respectivement sur les deux extrémités de montage de l'embout.

Selon un autre aspect, la présente invention propose un raccord de conduite tubulaire flexible comprenant un embout monté à l'extrémité d'une conduite tubulaire flexible, ladite conduite comprenant un tube polymérique interne, une armature autour dudit tube polymérique interne et une gaine polymérique externe autour de ladite armature, ladite armature comportant des fils d'armature enroulés autour dudit tube polymérique interne, ledit embout comprenant une extrémité de montage destinée à être emmanchée dans l'extrémité de ladite conduite, ledit raccord comprenant en outre un manchon adapté à venir coiffer ladite extrémité de conduite pour sertir ladite extrémité de conduite sur ladite extrémité de montage ; selon l'invention, ledit manchon comprend en outre une chambre annulaire étanche déformable située à l'intérieur dudit manchon, tandis que lesdits fils d'armature présentent des extrémités libres qui se prolongent en dehors de ladite gaine polymérique externe et qui sont rabattues contre ladite gaine polymérique externe, ladite chambre annulaire étanche entourant ladite extrémité de conduite ; et ladite chambre annulaire étanche est dilatée par injection d'un fluide sous pression dans ladite chambre annulaire étanche de manière à maintenir en prise lesdites extrémités libres de fils d'armature entre ladite gaine polymérique externe et ledit manchon.

Ainsi, une caractéristique de l'invention réside à la fois dans le mode de préparation de l'extrémité de conduite tubulaire et dans le mode de sertissage de l'extrémité de conduite sur ladite extrémité de montage par l'intermédiaire de la chambre annulaire étanche déformable. De la sorte, on obtient un raccord de conduite tubulaire flexible à un coût avantageux contrairement aux raccords de conduite obtenus selon l'art antérieur. Avantageusement, ledit fluide sous pression est un matériau durcissable qui prend en masse dans ladite chambre annulaire étanche après avoir été injecté. Il forme ainsi une pièce rigide annulaire indéformable, laquelle comprime de manière concentrique l'extrémité de conduite entre le manchon et l'extrémité de montage. Préférentiellement, ledit matériau durcissable est un matériau polymère réticulable.

Selon un mode de mise en oeuvre de l'invention avantageux, ledit manchon présentant une surface interne, ledit manchon comprend un ruban annulaire en matériau déformable monté à l'intérieur dudit manchon, ledit ruban annulaire formant avec ladite surface interne dudit manchon, ladite chambre annulaire étanche. Pour ce faire, ledit ruban annulaire en matériau déformable présente deux bords circulaires opposés, lesdits deux bords circulaires étant maintenus de façon étanche contre ladite surface interne, par exemple au moyen d'un joint ou bien par soudure. Avantageusement, ledit ruban annulaire est réalisé dans un alliage de cuivre, particulièrement malléable, pour se déformer sous la pression du fluide injecté et pour venir épouser les formes de la surface externe de la gaine polymérique externe contre laquelle sont rabattues les extrémités libres de fils d'armature.

De manière préférée, ledit embout comprend en outre une autre extrémité de montage opposée à ladite une extrémité de montage de manière à pouvoir raccorder deux extrémités de conduite en regard, ladite autre extrémité de montage étant emmanchée dans l'autre extrémité de conduite, tandis que ledit manchon vient coiffer lesdites extrémités de conduite. Ainsi, un seul et même manchon d'une longueur sensiblement équivalente à la longueur des deux extrémités de montage cumulées permet, grâce à une chambre annulaire étanche déformable s'étendant sur toute la longueur du manchon, de sertir ensemble les deux extrémités de conduite.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique en coupe axiale d'un raccord de conduite tubulaire flexible conforme à l'invention, selon un premier mode de mise en oeuvre et dans une première position ;
- la Figure 2 est une vue schématique en coupe axiale du raccord illustré sur la Figure 1 dans une seconde position ; et,
- la Figure 3 est une vue schématique partielle en coupe axiale d'un raccord de conduite tubulaire flexible selon un second mode de mise en oeuvre.

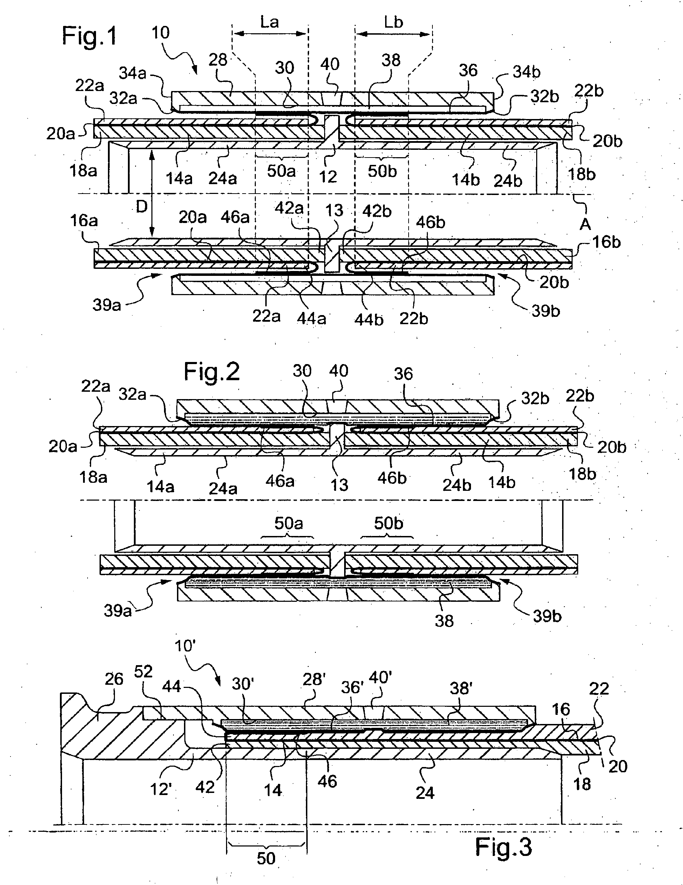

La Figure 1 montre un raccord 10 comportant un embout 12 d'axe de symétrie A, reliant deux extrémités 14a et 14b de conduite tubulaire flexible 16a, 16b. Ces conduites tubulaires flexibles 16a, 16b, comprennent respectivement un tube polymérique interne 18a, 18b, autour duquel est enroulée une couche d'armature 20a, 20b, de fils d'armature, cette même couche d'armature 20a, 20b, étant recouverte d'une gaine polymérique externe 22a, 22b, de protection. Les fils d'armature sont par exemple réalisés en aramide, et par exemple en kevlar®. L'embout 12 présente deux extrémités de montage 24a et 24b, symétriques l'une de l'autre par rapport à un collet 13, et respectivement emmanchées dans les tubes internes 18a et 18b jusqu'au collet 13. En outre, le raccord 10 comporte un manchon 28 qui s'étend de manière concentrique autour des extrémités de montage 24a et 24b et qui est centré par rapport au collet 13. Le manchon 28 présente une surface interne 30, délimitée par deux rebords annulaires internes 32a et 32b opposés l'un de l'autre et situés respectivement au bord des deux extrémités 34a et 34b du manchon 28. En outre, le manchon est équipé d'un ruban annulaire 36 en alliage de cuivre dont les deux bords circulaires opposés sont reliés de manière étanche respectivement aux deux rebords annulaires internes 32a et 32b. Ainsi, le ruban annulaire 36 et la surface interne 30 de manchon 28 définissent une chambre annulaire étanche déformable 38, tandis que le manchon 28 et les deux extrémités de montage 24a et 24b définissent respectivement un espace annulaire 39a, 39b apte à recevoir les extrémités 14a, 14b sans compression radiale dans cette première position illustrée sur la Figure 1. Par ailleurs, le manchon présente un orifice de remplissage 40 situé sensiblement au droit du collet et 13 dont on expliquera le rôle dans la suite de la description.

En outre, le tube polymérique interne 18a, 18b, respectivement des deux extrémités 14a et 14b, présente un bord interne libre 42a, 42b tandis que la gaine polymérique externe 22a, 22b présente elle, un bord externe libre 44a, 44b ; les deux bords libres 42a, 42b ; 44a, 44b s'étendant alors sensiblement bord à bord, tandis que l'armature 20a, 20b présente des extrémités libres 46a, 46b de fils d'armature qui s'étendent au-delà de l'entre-deux bords libres 42a, 42b ; 44a, 44b et qui sont rabattues autour de la gaine polymérique externe 22a, 22b sur une longueur axiale La, Lb, à partir du bord externe libre 44a, 44b. La longueur axiale La, Lb est comprise sensiblement entre la moitié du diamètre interne D de l'embout 12 et les deux tiers de ce diamètre interne D. Avantageusement, les extrémités libres 46a, 46b de fils d'armature sont rabattues contre la gaine polymérique externe 22a, 22b et y sont maintenues grâce à un ruban adhésif enroulé autour de l'extrémité 14a, 14b et qui les emprisonne. Bien évidemment, les deux extrémités 14a et 14b de conduite tubulaire flexible 16a, 16b, sont ainsi préparées avant d'être emmanchées respectivement sur les deux extrémités de montage 24a et 24b.

Après avoir installé ainsi les extrémités 14a, 14b de conduites flexibles 16a, 16b, on injecte sous pression dans la chambre annulaire étanche déformable 38 par l'intermédiaire de l'orifice de remplissage 40 et d'une pompe appropriée, un polymère de type époxy en phase liquide. Ce polymère de type époxy est en réalité nommé ainsi par abus de langage. En réalité le matériau liquide renferme un monomère époxyde et un agent réticulant par exemple de type amine, qui a été mélangé de façon homogène dans le monomère juste avant l'injection.

On retrouve sur la Figure 2, l'ensemble des éléments illustrés sur la Figure 1, excepté que la chambre annulaire étanche déformable 38 a été garnie du matériau polymère précité et par conséquent le ruban annulaire 36 déformé. Seuls les éléments concernés directement par la dilatation de la chambre annulaire étanche déformable 38 ont été ici référencés pour ne pas surcharger la Figure. Ainsi, le monomère et son agent réticulant ont donc été injectés sous pression à travers l'orifice de remplissage 40 ce qui a provoqué une dilatation de la chambre annulaire étanche déformable 38 et plus précisément une déformation du ruban annulaire 36 en alliage de cuivre notamment au niveau des rebords annulaire internes 32a et 32b où il s'est étiré. Le ruban annulaire 36, grâce à la pression exercée par le mélange époxyde, a donc été écarté radialement de la surface interne 30 pour, s'étendre dans les espaces annulaires 39a et 39b, et venir comprimer respectivement contre les extrémités de montage 24a et 24b, des parties libres 50a, 50b des extrémités 14a, 14b de conduite. Ces parties libres de conduite 50a, 50b, sont constituées respectivement et successivement, du tube polymérique interne 18a, 18b, de la couche d'armature 20a, 20b, de la gaine polymérique externe 22a, 22b et des extrémités libres 46a, 46b de fils d'armature 20a, 20b. En outre, la pression du mélange époxyde a été maintenue dans la chambre annulaire étanche déformable 38, soit grâce à un clapet anti-retour monté sur l'orifice de remplissage 40, soit tout simplement en maintenant la pression de la pompe précitée, jusqu'à ce que le mélange prenne en masse et forme un polymère entièrement réticulé et durci.

Lesdites parties libres 50a, 50b des extrémités 14a, 14b de conduite sont ainsi serties entre les extrémités de montage 24a et 24b et le ruban annulaire 36 de la chambre annulaire étanche 38. Le ruban annulaire 36 grâce à sa ductilité, épouse alors les anfractuosités et les aspérités des gaines externes 22a, 22b, des extrémités libres 46a, 46b de fils d'armature 20a, 20b et de la jointure au niveau du collet 13 de l'embout 12. De la sorte, les deux extrémités 14a et 14b de conduite tubulaire flexible 16a, 16b, sont reliées ensemble de manière étanche et sont entièrement solidaires l'une de l'autre, quand bien même elles seraient étirées dans deux sens opposés.

On se référera à présent à la Figure 3 pour illustrer un second mode de mise en oeuvre de l'invention. Sur cette Figure, les éléments ayant les mêmes fonctions que celles des éléments illustrés sur les Figures précédentes, comportent la même référence, soit affectée d'un signe prime « ' », soit débarrassée de la lettre qui l'accompagne. Ainsi il est montré un raccord 10' comprenant un embout 12' lequel présente une seule extrémité de montage 24. En revanche, l'embout 12' présente une extrémité de raccordement 26 terminée par une bride de fixation et il est relié à une seule extrémité 14 de conduite tubulaire flexible 16. Cette dernière comprend un tube polymérique interne 18, une couche d'armature 20 de fils d'armature, cette couche d'armature 20 étant recouverte d'une gaine polymérique externe 22. L'extrémité de montage 24 a été emmanchée dans le tube polymérique interne 18.

En outre, le raccord 10' comporte un manchon 28' qui s'étend de manière concentrique autour de l'extrémité de montage 24. Le manchon 28' est totalement analogue à celui qui est montré sur les Figures 1 et 2. Le manchon 28' est fixé de façon solidaire à l'extrémité de raccordement 26 par l'intermédiaire de moyens de fixation 52 du type vis écrou ou équivalent.

De plus, le tube polymérique interne 18, présente un bord interne libre 42 tandis que la gaine polymérique externe 22 présente elle, un bord externe libre 44 ; les deux bords libres 42, 44, s'étendant alors sensiblement bord à bord, tandis que l'armature 20 présente des extrémités libres 46 de fils d'armature qui s'étendent au-delà de l'entre-deux bords libres 42, 44 et qui sont rabattues contre la gaine polymérique externe 22. L'extrémité 14 de conduite tubulaire flexible 16 est ainsi préparée avant d'être emmanchée sur l'extrémité de montage 24.

Ensuite, on injecte sous pression dans la chambre annulaire étanche déformable 38' par l'intermédiaire de l'orifice de remplissage 40' et d'une pompe appropriée, un mélange époxyde du type précité. La Figure 3, montre le raccord 10' où la chambre annulaire étanche déformable 38' a été garnie du matériau polymère et dilatée comme cela est illustré sur la Figure 2.

Le ruban annulaire 36' a donc été écarté radialement de la surface interne 30' pour venir comprimer respectivement contre l'extrémité de montage 24, la partie libre 50 de l'extrémité 14. Cette partie libre 50 est constituée respectivement et successivement, du tube polymérique interne 18, de la couche d'armature 20, de la gaine polymérique externe 22 et des extrémités libres 46 de fils d'armature 20. En outre, la pression du mélange époxyde a aussi été maintenue dans la chambre annulaire étanche déformable 38', jusqu'à ce que le mélange prenne en masse et forme un polymère entièrement réticulé.

La partie libre 50 est ainsi sertie entre l'extrémité de montage 24 et le ruban annulaire 36' de la chambre annulaire étanche 38'. Là également, le ruban annulaire 36' grâce à sa ductilité, vient épouser les aspérités de la gaine polymérique externe 22 et des extrémités libres 46 de fils d'armature 20 en y exerçant une forte pression.

Le raccord 10' ainsi formé est moins coûteux que les raccords obtenus selon l'art antérieur, car la longueur de conduite à sertir, compte tenu de l'efficacité du sertissage, est moins grande et par conséquent, la longueur d'embout et de manchon nécessaire doit être moins importante. Au surplus, la technique utilisant une chambre annulaire étanche déformable, est à la fois plus rapide à mettre en oeuvre et bien moins coûteuse que les techniques de sertissage habituel.

## Revendications

1. Procédé de montage d'un embout (12') sur une extrémité (14) de conduite tubulaire flexible (16), le procédé étant du type selon lequel :
- on fournit une conduite tubulaire flexible (16) comprenant un tube polymérique interne (18), une armature (20) autour dudit tube polymérique interne et une gaine polymérique externe (22) autour de ladite armature, ladite armature comportant des fils d'armature enroulés autour dudit tube polymérique interne ;
- on décollette ladite armature (20) à ladite extrémité de conduite pour libérer des extrémités libres (46) de fils d'armature et pour rabattre lesdites extrémités libres de fils d'armature contre ladite gaine polymérique externe (22)
- on rabat lesdites extrémités libres de fils d'armature contre ladite gaine polymérique externe ;
- on fournit un embout (12') comprenant une extrémité de montage (24) **caractérisé en ce qu'**il comprend en outre les étapes suivantes :
- on emmanche ladite extrémité de montage dans l'extrémité de ladite conduite ;
- on fournit un manchon (28') adapté à venir coiffer ladite extrémité de conduite ;
- on forme une chambre annulaire étanche déformable (38') à l'intérieur dudit manchon (28'), ladite chambre annulaire étant destinée à entourer ladite extrémité de conduite (14) ;
- on coiffe ladite extrémité de conduite avec ledit manchon;
- on injecte un fluide sous pression dans ladite chambre annulaire (38') pour dilater ladite chambre annulaire et maintenir en prise lesdites extrémités libres (46) de fils d'armature entre ladite gaine polymérique externe et ledit manchon et pour sertir ladite extrémité de conduite sur ladite extrémité de montage.

2. Procédé de montage selon la revendication 1, **caractérisé en ce qu'**on fournit un embout comprenant une extrémité de montage rigide.

3. Procédé de montage selon la revendication 1 ou 2 **caractérisé en ce qu'**on injecte sous pression dans ladite chambre annulaire (38') un matériau adapté à prendre en masse après l'injection.

4. Procédé de montage selon la revendication 3, **caractérisé en ce qu'**on injecte un matériau polymère réticulable.

5. Procédé de montage selon l'une quelconque des revendications 1 à 4, **caractérisé en ce qu'**on monte à l'intérieur dudit manchon (28') un ruban annulaire (36') en matériau déformable pour former une chambre annulaire (38') étanche déformable.

6. Procédé de montage selon l'une quelconque des revendications 1 à 5, **caractérisé en ce qu'**on fournit un embout (12) comprenant en outre une autre extrémité de montage (24b) opposée à ladite une extrémité de montage (24a) et **en ce qu'**on fournit en outre une autre conduite (16b) présentant une autre extrémité (14b) de conduite, ladite autre extrémité de montage étant emmanchée dans ladite autre extrémité de conduite, tandis que ledit manchon (28) vient coiffer lesdites extrémités (14a, 14b) de conduite.

7. Raccord (10') de conduite tubulaire flexible (16) comprenant d'une part une conduite tubulaire flexible (16) présentant une extrémité (14) de conduite tubulaire flexible et d'autre part un embout (12') comprenant une extrémité de montage (24), monté à ladite extrémité (14) de conduite tubulaire flexible (16), ladite conduite comprenant un tube polymérique interne (18), une armature (20) autour dudit tube polymérique interne et une gaine polymérique externe (22) autour de ladite armature, ladite armature comportant des fils d'armature enroulés autour dudit tube polymérique interne, lesdits fils d'armature présentent des extrémités libres (46) qui se prolongent en dehors de ladite gaine polymérique externe (22) et qui sont rabattues contre ladite gaine polymérique externe ;
**caractérisé en ce qu'**il comprend en outre un manchon (28') adapté à venir coiffer ladite extrémité de conduite, tandis que ladite extrémité de montage est destinée à être emmanchée dans l'extrémité (14) de ladite conduite, ledit manchon (28') comprenant en outre une chambre annulaire (38') étanche déformable située à l'intérieur dudit manchon, ladite chambre annulaire (38') étanche entourant ladite extrémité de conduite ;
et **en ce que** ladite chambre annulaire (38') étanche est dilatée par injection d'un fluide sous pression dans ladite chambre annulaire étanche de manière à maintenir en prise lesdites extrémités libres (46) de fils d'armature entre ladite gaine polymérique externe et ledit manchon et pour sertir ladite extrémité de conduite sur ladite extrémité de montage.

8. Raccord de conduite selon la revendication 7, **caractérisé en ce que** ladite extrémité de montage est rigide.

9. Raccord de conduite selon la revendication 7 ou 8, **caractérisé en ce que** ledit fluide sous pression est un matériau durcissable adapté à prendre en masse dans ladite chambre annulaire (38') étanche.

10. Raccord de conduite selon la revendication 9, **caractérisé en ce que** ledit matériau durcissable est un matériau polymère réticulable.

11. Raccord de conduite selon l'une quelconque des revendications 7 à 10 **caractérisé en ce que**, ledit manchon (28') présentant une surface interne (30'), ledit manchon comprend un ruban annulaire (36') en matériau déformable monté à l'intérieur dudit manchon, ledit ruban annulaire (36') formant avec ladite surface interne (30') ladite chambre annulaire (38') étanche.

12. Raccord de conduite selon la revendication 11, **caractérisé en ce que** ledit ruban annulaire (36') en matériau déformable présente deux bords circulaires opposés, lesdits deux bords circulaires étant maintenus de façon étanche contre ladite surface interne (30').

13. Raccord de conduite selon la revendication 11 ou 12, **caractérisé en ce que** ledit ruban annulaire (36') est réalisé dans un alliage de cuivre.

14. Raccord de conduite selon l'une quelconque des revendications 7 à 13, **caractérisé en ce que** ledit embout (12) comprend en outre une autre extrémité de montage (24b) opposée à ladite une extrémité de montage (24a), ladite autre extrémité de montage étant susceptible d'être emmanchée dans une autre extrémité (14b) de conduite, tandis que ledit manchon (28) vient coiffer lesdites extrémités (14a, 14b) de conduite.

## Patentansprüche

1. Verfahren zur Montage eines Stutzens (12') an einem Ende (14) einer flexiblen Rohrleitung (16), wobei das Verfahren von dem Typ ist, wonach:
- eine flexible Rohrleitung (16) bereitgestellt wird, die ein inneres Polymerrohr (18), eine Bewehrung (20) um das innere Polymerrohr herum und eine äußere Polymerhülle (22) um die Bewehrung herum umfasst, wobei die Bewehrung Bewehrungsdrähte aufweist, die um das innere Polymemohr (18) herum gewickelt sind;
- die Bewehrung (20) am Leitungsende geköpft wird, um freie Bewehrungsdrahtenden (46) freizusetzen und um die freien Bewehrungsdrahtenden gegen die äußere Polymerhülle (22) umzubiegen;
- die freien Bewehrungsdrahtenden gegen die äußere Polymerhülle umgebogen werden;
- ein Stutzen (12') bereitgestellt wird, der ein Montageende (24') umfasst; **dadurch gekennzeichnet, dass** es ferner die folgenden Schritte umfasst:
- das Montageende wird in das Ende der Leitung eingeschoben;
- eine Hülse (28') wird bereit gestellt, die dazu geeignet ist, das Ende der Leitung abzudecken;
- im Inneren der Hülse (28') wird eine verformbare dichte Ringkammer (38') bereitgestellt, wobei die Ringkammer dazu bestimmt ist, das Ende der Leitung (14) zu umgeben;
- das Leitungsende wird mit der Hülse abgedeckt;
- ein Fluid wird unter Druck in die Ringkammer (38') eingespritzt, um die Ringkammer aufzuweiten und um die freien Bewehrungsdrahtenden (46) zwischen der äußeren Polymerhülle und der Hülse zu halten und um das Leitungsende auf das Montageende zu quetschen.

2. Montageverfahren nach Anspruch 1, **dadurch gekennzeichnet, dass** ein Stutzen bereitgestellt wird, der ein starres Montageende umfasst.

3. Montageverfahren nach Anspruch 1 oder 2, **dadurch gekennzeichnet, dass** in die Ringkammer (38') unter Druck ein Material eingespritzt wird, das dazu geeignet ist, sich nach dem Einspritzen abzubinden.

4. Montageverfahren nach Anspruch 3, **dadurch gekennzeichnet, dass** ein vernetzbares Polymermaterial eingespritzt wird.

5. Montageverfahren nach einem der Ansprüche 1 bis 4, **dadurch gekennzeichnet, dass** im Inneren der Hülse (28') ein ringförmiges Band (36') aus verformbarem Material montiert wird, um eine verformbare dichte Ringkammer (38') zu bilden.

6. Montageverfahren nach einem der Ansprüche 1 bis 5, **dadurch gekennzeichnet, dass** ein Stutzen (12) bereitgestellt wird, der ferner ein anderes Montageende (24b) umfasst, das zu dem einen Montageende (24a) entgegengesetzt ist, und dass ferner eine andere Leitung (16b) bereitgestellt wird, die ein anderes Ende (14b) der Leitung aufweist, wobei das andere Montageende in das andere Ende der Leitung eingeschoben wird, während die Hülse (28) die Enden (14a, 14b) der Leitung abdeckt.

7. Anschluss (10') für flexible Rohrleitung (16), umfassend einerseits eine flexible Rohrleitung (16), die ein Ende (14) der flexiblen Rohrleitung aufweist, und andererseits einen Stutzen (12'), der ein Montageende (24) umfasst, das an dem Ende (14) der flexiblen Rohrleitung(16) montiert ist, wobei die Leitung ein inneres Polymerrohr (18), eine Bewehrung (20) um das innere Polymemohr herum und eine äußere Polymerhülle (22) um die Bewehrung herum umfasst, wobei die Bewehrung Bewehrungsdrähte aufweist, die um das innere Polymemohr herum gewickelt sind, wobei die Bewehrungsdrähte freie Enden (46) aufweisen, die sich außerhalb der äußeren Polymerhülle (22) fortsetzen und die gegen die äußere Polymerhülle umgebogen sind;
**dadurch gekennzeichnet, dass** er ferner eine Hülse (28') umfasst, die dazu geeignet ist, das Leitungsende abzudecken, während das Montageende dazu bestimmt ist, in das Ende (14) der Leitung eingeschoben zu werden, wobei die Hülse (28') ferner eine verformbare dichte Ringkammer (38') umfasst, die im Inneren der Hülse befindlich ist, wobei die verformbare dichte Ringkammer (38') das Leitungsende umgibt;
und dass die dichte Ringkammer (38') durch Einspritzen eines Fluids unter Druck in die dichte Ringkammer aufgeweitet wird, so dass sie die freien Bewehrungsdrahtenden (46) zwischen der äußeren Polymerhülle und der Hülse hält und um das Leitungsende auf das Montageende zu quetschen.

8. Leitungsanschluss nach Anspruch 7, **dadurch gekennzeichnet, dass** das Montageende starr ist.

9. Leitungsanschluss nach Anspruch 7 oder 8, **dadurch gekennzeichnet, dass** das Fluid unter Druck ein aushärtbares Material ist, das dazu geeignet ist, sich nach dem Einspritzen in die dichte Ringkammer (38') abzubinden.

10. Leitungsanschluss nach Anspruch 9, **dadurch gekennzeichnet, dass** das aushärtbare Material ein vernetzbares Polymermaterial ist.

11. Leitungsanschluss nach einem der Ansprüche 7 bis 10, **dadurch gekennzeichnet, dass**, da die Hülse (28') eine Innenfläche (30') aufweist, die Hülse ein ringförmiges Band (36') aus verformbarem Material umfasst, das im Inneren der Hülse montiert ist, wobei das ringförmige Band (36') mit der Innenfläche (30') die dichte Ringkammer (38') bildet.

12. Leitungsanschluss nach Anspruch 11, **dadurch gekennzeichnet, dass** das ringförmige Band (36') aus verformbarem Material zwei entgegengesetzte kreisförmige Ränder aufweist, wobei die zwei kreisförmigen Ränder abdichtend gegen die Innenfläche (30') gehalten werden.

13. Leitungsanschluss nach Anspruch 11 oder 12, **dadurch gekennzeichnet, dass** das ringförmige Band (36') aus einer Kupferlegierung realisiert ist.

14. Leitungsanschluss nach einem der Ansprüche 7 bis 13, **dadurch gekennzeichnet, dass** der Stutzen (12) ferner ein anderes Montageende (24b) umfasst, das zu dem einen Montageende (24a) entgegengesetzt ist, wobei das andere Montageende in ein anderes Ende (14b) der Leitung eingeschoben werden kann, während die Hülse (28) die Enden (14a, 14b) der Leitung abdeckt.

## Claims

1. A method of mounting a nipple (12') on a flexible tubular pipe (16) end (14), the method being of the type according to which :
there is provided a flexible tubular pipe (16) comprising an inner polymeric tube (18), an armor (20) around said inner polymeric tube and an outer polymeric sheath (22) around said armor, said armor including armor threads wound around said inner polymeric tube ;
said armor (20) is cropped at said pipe end so as to release free ends (46) of armor threads and to fold back said free ends of armor threads against said outer polymeric sheath (22) ;
said free ends of armor threads are folded back against said outer polymeric sheath ;
there is provided a nipple (12') comprising a mounting end (24) ;
**characterized in that** it furthermore comprises the following steps :
said mounting end is fitted into the end of said pipe ;
there is provided a sleeve (28') suitable for shrouding said pipe end ;
a deformable leak-tight annular chamber (38') is formed inside said sleeve (28'), said annular chamber being intended to surround said pipe end (14);
said pipe end is shrouded with said sleeve ;
a pressurized fluid is injected into said annular chamber (38') to expand said annular chamber and hold said free ends (46) of armor threads gripped between said outer polymeric sheath and said sleeve and so as to clamp said pipe end onto said mounting end

2. The mounting method as claimed in claim 1, **characterized in that** it is provided a nipple having a rigid mounting end.

3. The mounting method as claimed in claim 1 or 2, **characterized in that** a material suitable for bulk setting after injection is injected under pressure into said annular chamber (38').

4. The mounting method as claimed in claim 3, **characterized in that** a cross-linkable polymer material is injected.

5. The mounting method as claimed in any one of claims 1 to 4, **characterized in that** is mounted inside said sleeve (28') an annular strip (36') made of a deformable material to form a deformable leak-tight annular chamber (38').

6. The mounting method as claimed in any one of claims 1 to 5, **characterized in that** there is provided a nipple (12) further comprising another mounting end (24b) opposite to said one mounting end (24a) and **in that** there is further provided another pipe (16b) having another pipe end (14b), said other mounting end being fitted into said other pipe end, while said sleeve (28) shrouds said pipe ends (14a, 14b).

7. A flexible tubular pipe (16) connector (10') comprising, on one hand, a flexible tubular pipe (16) having a flexible tubular pipe end (14) and, on the other hand, a nipple (12') comprising a mounting end (24), mounted at said flexible tubular pipe (16) end (14), said pipe comprising an inner polymeric tube (18), an armor (20) around said inner polymeric tube and an outer polymeric sheath (22) around said armor, said armor including armor threads wound around said inner polymeric tube, said armor threads including free ends (46) which extend out from said outer polymeric sheath (22) and which are folded back against said outer polymeric sheath ;
**characterized in that** it further comprise a sleeve (28') suitable for shrouding said pipe end, while said mounting end is intended to be fitted into the end (14) of said pipe, said sleeve (28') further comprising a deformable leak-tight annular chamber (38') situated inside said sleeve, said leak-tight annular chamber (38') surrounding said pipe end;
and **in that** said leak-tight annular chamber (38') is expanded by injecting a pressurized fluid into said leak-tight annular chamber so as to hold said free ends (46) of armor threads gripped between said outer polymeric sheath and said sleeve and so as to clamp said pipe end onto said mounting end.

8. The pipe connector as claimed in claim 7, **characterized in that** said mounting end is rigid.

9. The pipe connector as claimed in claim 7 or 8, **characterized in that** said pressurized fluid is a curable material suitable for bulk setting in said leak-tight annular chamber (38').

10. The pipe connector as claimed in claim 9, **characterized in that** said curable material is a cross-linkable polymer material.

11. The pipe connector as claimed in any one of claims 7 to 10, **characterized in that** said sleeve (28') having an inner surface (30'), said sleeve comprises an annular strip (36') made of deformable material mounted inside said sleeve, said annular strip (36') forming with said inner surface (30') said leak-tight annular chamber (38').

12. The pipe connector as claimed in claim 11, **characterized in that** said annular strip (36') made of deformable material has two opposite circular edges, said two circular edges being held in a leak-tight manner against said inner surface (30').

13. The pipe connector as claimed in claim 11 or 12, **characterized in that** said annular strip (36') is made of a copper alloy.

14. The pipe connector as claimed in any one of claims 7 to 13, **characterized in that** said nipple (12) further comprises another mounting end (24b) opposite to said one mounting end (24a), said other mounting end being able to be fitted into another pipe end (14b), while said sleeve (28) shrouds said pipe ends (14a, 14b).
